(19) Europäisches Patentamt / European Patent Office / Office européen des brevets

(11) **EP 2 546 801 B1**

(12) **FASCICULE DE BREVET EUROPEEN**

(45) Date de publication et mention de la délivrance du brevet:
**07.01.2015 Bulletin 2015/02**

(51) Int Cl.:
*G06T 7/00* *(2006.01)*     *G06K 9/32* *(2006.01)*
*G06T 5/10* *(2006.01)*

(21) Numéro de dépôt: **12175637.3**

(22) Date de dépôt: **10.07.2012**

(54) **Procédé de détection et de correction de l'orientation d'un document présent dans une image numérique**

Verfahren zur Erfassung und Korrektur der Ausrichtung eines Dokuments, das in einem digitalen Bild vorhanden ist

Method for detecting and correcting the direction of a document in a digital image

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.07.2011 FR 1156259**

(43) Date de publication de la demande:
**16.01.2013 Bulletin 2013/03**

(73) Titulaire: **SAGEMCOM DOCUMENTS SAS**
**92500 Rueil Malmaison (FR)**

(72) Inventeurs:
• **Berger, Jérôme**
  **92500 Rueil Malmaison (FR)**
• **Petit, Frédéric**
  **92500 Rueil Malmaison (FR)**
• **Carre, Philippe**
  **92500 Rueil Malmaison (FR)**

(74) Mandataire: **Maillet, Alain**
  **Cabinet Le Guen Maillet**
  **5, place Newquay**
  **B.P. 70250**
  **35802 Dinard Cedex (FR)**

(56) Documents cités:
**WO-A2-2011/001439**

• **HULL J J ET AL: "Document Image Skew Detection: Survey and Annotated Bibliography", 1 janvier 1998 (1998-01-01), DOCUMENT ANALYSIS SYSTEMS II, WORLD SCIENTIFIC, US, PAGE(S) 40 - 64, XP002562656, * le document en entier ***
• **Duda R O; Hart P E; Stork D G: "Pattern Classification", 2001, Wiley-Interscience, XP002669194, pages 526-528, * page 526 - page 528 ***

EP 2 546 801 B1

## Description

La présente invention concerne un procédé de détection et de correction de l'orientation d'un document présent dans une image numérique.

Il est connu de numériser un document avec un scanner à défilement. Lors de cette numérisation, il arrive très souvent que le document soit posé en biais sur la table du scanner. Il résulte alors de ce scanner une image numérique sur laquelle le document numérisé est en biais par rapport au bord de l'image générée par ce scanner.

Ce type d'image numérique pose des problèmes de qualité visuelle car si le document est un texte, il est alors particulièrement pénible de lire la page imprimée avec un texte de travers. De plus, si l'image numérique est prévue pour subir un traitement de reconnaissance de caractères, le biais du document dans l'image induit alors le plus souvent un dysfonctionnement de ces algorithmes de reconnaissance.

De nombreuses méthodes d'analyse et d'amélioration des images issues de la numérisation des documents ont été mises en place et le redressement des images numérisées pour corriger ce biais est l'un des traitements essentiels à la mise en oeuvre ultérieure de méthodes d'analyse de ces documents.

Le document WO 2001/0041439 divulgue un procédé de détection et de correction de l'orientation d'un document présent dans une image numérique. Ce document suggère de dériver un histogramme à partir des angles des lignes de chaque côté du document. Une première estimation angulaire (pour chaque côté) correspond à l'angle avec la plus haute fréquence dans l'histogramme. L'angle d'inclinaison globale est ensuite calculé en regroupant les angles estimés de chacun des quatre côtés.

La présente invention permet de détecter et de corriger l'orientation d'un document présent dans une telle image, c'est-à-dire de redresser automatiquement la représentation de ce document dans l'image numérique.

A cet effet, il est connu des méthodes de détection et de correction d'une telle orientation qui utilisent le bord du document comme référence absolue. Toutefois ces méthodes présentent des inconvénients. L'un d'entre eux est qu'il n'est pas toujours possible ou facile de repérer le bord du document. De plus, le document à numériser peut être le résultat d'une mauvaise photocopie et le texte présent sur ce document peut être en biais par rapport au bord de ce document.

D'autres méthodes analysent des profils de projection. L'idée est ici de calculer des profils de projection de l'image pour tous les angles de biais possibles et de les analyser. Ce type d'estimation implique un fort coût en temps de calcul car cela nécessite d'utiliser une résolution d'angle assez élevée pour obtenir une bonne précision de ce biais.

D'autres méthodes sont basées sur la décomposition en composantes connexes. Ces méthodes supposent que les caractères du texte du document sont alignés et proches les uns des autres, et que leur relation spatiale peut être utilisée pour déterminer l'angle de rotation à appliquer à l'image.

D'autres approches incluent l'analyse de la déviation verticale, la transformée de Fourier ou sont encore basées sur des opérations morphologiques. Une autre méthode est d'utiliser la transformée de Hough qui permet de détecter les lignes principales de l'image et de déterminer l'orientation du document comme étant l'orientation de ces lignes principales par rapport à un repère de l'image. Cette méthode part de l'hypothèse que les caractères d'une même ligne de texte sont alignés.

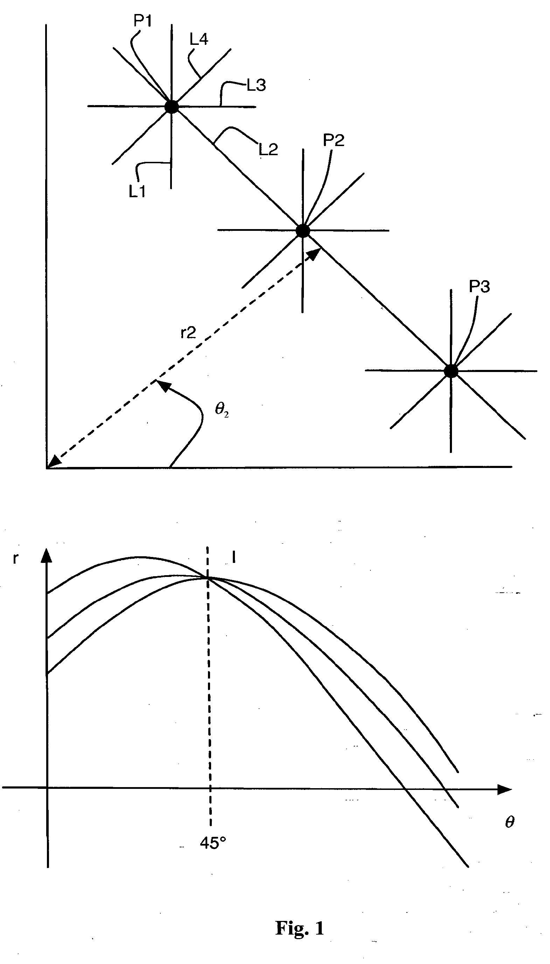

La Fig. 1 représente une illustration de la détection de lignes d'une image numérique par transformée de Hough.

Le principe de la transformée de Hough est de représenter une ligne d'image par son équation paramétrique $r = x.\cos\theta + y.\sin\theta$ dans laquelle le couple $(r,\theta)$ sont les coordonnées polaires exprimées dans un espace bidimensionnel appelé espace de Hough. Le paramètre $r$ représente la distance entre la ligne et l'origine d'un repère et le paramètre $\theta$ est l'angle d'un vecteur partant de l'origine de ce repère et le point de la ligne le plus proche de cette origine. Par chaque pixel de l'image, passe un ensemble de lignes qui sont chacune définies par un couple de paramètres $(r,\theta)$ particulier qui est unique si

$$\theta \in [0, \pi) \text{ et } r \in \Re$$ (espace des réels) ou si $\theta \in [0, 2\pi) \text{ et } r \geq 0.$

En pratique, les paramètres $r$ et $\theta$ sont limités à quelques valeurs discrètes particulières obtenues en discrétisant les plages de valeurs de ces deux paramètres. Le paramètre $r$ appartient à une plage de valeurs qui définit un voisinage autour d'un pixel de l'image tandis que le paramètre $\theta$ appartient à une plage de valeurs, appelée par la suite plage angulaire.

La transformée de Hough utilise un tableau bidimensionnel, appelé accumulateur, dont le nombre de lignes et de colonnes correspond au nombre des valeurs discrètes des paramètres $r_i$ et $\theta_i$. Pour chaque pixel de l'image, il suffit donc de considérer chaque pixel de son voisinage, de calculer les coordonnées polaires de la ligne qui relie le pixel à ce pixel voisin, et d'incrémenter d'une unité la case de l'accumulateur qui correspond à un couple $(r_i,\theta_i)$ le plus proche aux coordonnées polaires ainsi calculées.

Les lignes principales de l'image sont alors celles qui correspondent aux couples $(r_i,\theta_i)$ qui définissent des cases de l'accumulateur dont les scores sont les plus élevés.

En effet, si chaque pixel de l'image appartient à des lignes, chacune définie par un couple particulier de coordonnées polaires, en faisant varier ces coordonnées polaires pour un pixel donné, on obtient alors une courbe, en l'occurrence une sinusoïde, dans l'espace de Hough pour ce pixel. Un ensemble de pixels qui appartient à une même ligne dans l'espace image produit alors des sinusoïdes qui se coupent en un même point de l'espace de Hough. Il suffit alors de détecter les points de l'espace de Hough où un maximum de sinusoïdes se coupe pour extraire les lignes principales de l'image, ce qui revient à déterminer les cases de l'accumulateur qui ont les scores les plus élevés. A cet effet, des seuils de comparaison des scores sont parfois utilisés.

A titre d'illustration de l'utilisation de la transformée de Hough pour l'extraction de lignes d'une image, considérons trois pixels du plan image, P1, P2 et P3 et quatre lignes possibles L1, L2, L3, et L4 qui pourraient, potentiellement, relier ces pixels et qui forment des angles $\theta_i$ différents par rapport à un repère donné. Selon cet exemple, la ligne L1 forme un angle de 0° par rapport à ce repère tandis que les lignes L2, L3, et L4 forment respectivement un angle de 45° (tel que illustré sur la Fig. 1), 90° et 135°. Ces angles sont calculés en tirant une ligne perpendiculaire à chaque ligne qui passe par l'origine du repère (un exemple est donné en pointillé). Les trois sinusoïdes, en partie basse de la Fig. 1, représentent ces sinusoïdes de l'espace de Hough qui sont relatives à ces trois pixels P1, P2 et P3. Sur cet exemple, les trois sinusoïdes se coupent en un point I qui correspond à un couple de valeurs $(r,\theta)$ particulier qui définit l'équation paramétrique d'une ligne(en l'occurrence L2) qui relie les trois points P1,P2 et P3.

Ainsi, des paramètres de cette transformée de Hough sont, d'une part, la définition d'une plage angulaire qui définit les valeurs limites du paramètre $\theta$ et, d'autre part, la discrétisation de ce paramètre sur cette plage angulaire c'est-à-dire le nombre de valeurs $\theta_i$ qui sont considérées dans l'accumulateur.

La transformée de Hough n'est pas appliquée directement sur tous les points de l'image car cela impliquerait des temps de calcul exorbitants. En général, la transformée de Hough est appliquée sur un ensemble de points d'intérêts détectés préalablement dans l'image. Un filtre de Canny est très souvent utilisé pour détecter ces points d'intérêt (Canny, J. (1986). A computational approach to edge detection. In IEEE Transactions on Pattern Analysis and Machine Intelligence, volume 8, pages 679-714).

Du aux imperfections des détecteurs de points d'intérêts (ou de contours), l'accumulateur comporte le plus souvent des points d'intérêts qui ne sont d'aucune utilité pour déterminer les lignes principales de l'image mais au contraire faussent les décisions à prendre en fonction des scores de cet accumulateur.

Il est alors très souvent difficile, voire impossible, de s'assurer que les lignes principales indiquées par ces scores soient pertinentes.

Le problème résolu par la présente invention est de remédier aux inconvénients suscités.

A cet effet, la présente invention concerne un procédé de détection et de correction de l'orientation d'un document présent dans une image numérique. Ledit procédé comportant une étape d'extraction de lignes de l'image et de leurs angles exprimés par rapport à un repère du plan image, le procédé est caractérisé en ce qu'il comporte également les étapes suivantes :

- déterminer la dispersion des angles associés aux lignes extraites,
- si la dispersion des angles est inférieure à un seuil, rotation de l'image selon un angle de rotation calculé par la moyenne des angles associés à toutes les lignes extraites de l'image,
- sinon
- partitionner les lignes extraites selon leur angle associé pour former des classes,
- sélectionner la classe dont la dispersion spatiale des lignes est maximale, et
- rotation de l'image selon un angle de rotation calculé par la moyenne des angles associés aux lignes qui appartiennent à cette classe ainsi sélectionnée.

Le partitionnement des lignes (*data clustering* en anglais) en classe et la détermination de l'angle de rotation à partir des angles associés aux lignes qui appartiennent à une même classe permettent d'augmenter la robustesse au bruit de la détermination de l'angle de rotation et ce par rapport aux méthodes de l'état de la technique qui basent la détermination de cet angle de rotation directement sur l'angle qui maximise le score établi par la transformée de Hough.

Selon un mode de réalisation, les lignes sont partitionnées selon la méthode non supervisée et exclusive.

Selon un mode de réalisation, la méthode non supervisée et exclusive partitionne les lignes extraites en un nombre entier M de classes, fixé *a priori,* et comporte les étapes suivantes :

1. choisir *a priori* M centres de classe, chaque centre de classe étant un angle associé à l'une des lignes extraites,
2. créer une nouvelle partition des lignes extraites en affectant une ligne extraite à la classe lorsqu'un critère de distance entre l'angle associé à cette ligne extraite et le centre de cette classe est minimal,
3. calculer des centres de gravité de chaque classe ainsi créée,
4. répéter les étapes 2 et 3 jusqu'à obtenir un extremum pour un critère d'arrêt.

Selon un mode de réalisation, les M centres de classe sont choisis aléatoirement parmi les angles associés aux lignes extraites.

Ce mode de réalisation permet de minimiser le risque d'obtenir une partition finale qui ne corresponde pas à la partition optimale, c'est-à-dire d'obtenir un minimum local.

Selon un mode de réalisation, le critère d'arrêt est un nombre prédéfini d'itérations ou un nombre qui quantifie une stationnarité de la partition.

Selon un mode de réalisation, le critère de distance est une métrique de Minkowski.

Selon un mode de réalisation, au cours de l'étape de sélection de la classe, une variance des distances entre lignes d'une même classe est calculée pour chaque classe et la classe sélectionnée est celle qui minimise cette valeur de variance.

Ce mode de réalisation est avantageux car il permet de quantifier si les lignes d'une même classe Cj s'étalent sur l'ensemble du document ou si au contraire ces lignes sont regroupées autour d'une structure particulière de ce document.

Selon un mode de réalisation, au cours de la sélection de la classe,

- pour chaque ligne extraite d'une même classe, est calculée une distance entre une ligne de cette classe et chacune des autres lignes de cette classe,
- une densité de lignes est ensuite calculée pour chaque classe par la somme des valeurs minimales des distances entre lignes ainsi calculées pour chaque ligne extraite de cette classe, et
- la classe sélectionnée est celle qui maximise cette densité de lignes.

Ce mode de réalisation est avantageux lorsque la plage angulaire utilisée par la transformée de Hough est restreinte à un secteur angulaire de quelques degrés car elle permet alors de quantifier plus finement la dispersion des lignes d'une même classe que ne le fait le mode de réalisation basé sur la variance des distances entre lignes.

Selon un mode de réalisation, l'image est binarisée préalablement à l'étape d'extraction de lignes de l'image, ladite binarisation étant basée sur un seuillage adaptatif.

Selon un mode de réalisation, les lignes sont extraites par la transformée de Hough paramétrée, entre autres, par les valeurs limites d'une plage angulaire.

Selon un mode de réalisation, les scores inhérents à la transformée de Hough sont pondérés par les niveaux de gris des pixels de l'image.

Selon un mode de réalisation, l'ensemble des étapes du procédé est réalisé deux fois, lors d'une première itération, la plage angulaire utilisée par la transformée de Hough est choisie pour couvrir l'ensemble des orientations possibles d'une ligne autour d'un pixel de l'image, la sélection de la classe C étant alors basée sur la variance des distances entre lignes et un angle de rotation est alors calculé par la moyenne des angles associés aux lignes de la classe sélectionnée, et lors de la seconde itération, la plage angulaire utilisée par la transformée de Hough est limitée à un secteur angulaire autour de l'angle de rotation calculé à l'itération précédente, la sélection de la classe C étant alors basée sur la densité des lignes de la classe ainsi sélectionnée, et un angle de rotation est alors calculé par la moyenne des angles associés aux lignes de la classe sélectionnée.

Ce mode de réalisation permet de minimiser fortement le coût du calcul de la transformée de Hough et l'espace mémoire facilitant ainsi l'intégration du procédé dans des systèmes embarqués.

Selon une variante de ce mode de réalisation, la seconde étape est itérée, la plage angulaire utilisée par la transformée de Hough étant alors limitée à un secteur angulaire de plus en plus petit autour de l'angle de rotation calculé à l'itération précédente, la sélection de la classe C étant alors basée sur la densité des lignes de la classe ainsi sélectionnée, et un angle de rotation est alors calculé par la moyenne des angles associés aux lignes de la classe sélectionnée.

L'invention concerne également un programme d'ordinateur, qui peut être stocké sur un support et/ou téléchargé d'un réseau de communication, afin d'être lu par un système informatique ou un processeur. Ce programme d'ordinateur comprend des instructions pour implémenter le procédé mentionné ci-dessus, lorsque ledit programme est exécuté par le système informatique ou le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 illustre le principe de la transformée de Hough pour extraire des lignes d'une image numérique.

La Fig. 2 représente un diagramme des étapes du procédé de détection et de correction de l'orientation d'un document présent dans une image numérique.

La Fig. 3 représente un mode de réalisation itératif du procédé pour extraire des lignes d'une image.

La Fig. 4 représente une illustration d'un mode de réalisation du partitionnement de lignes en classes.

La Fig. 5 illustre schématiquement l'architecture d'un dispositif de détection et de correction de l'orientation d'un document présent dans une image numérique.

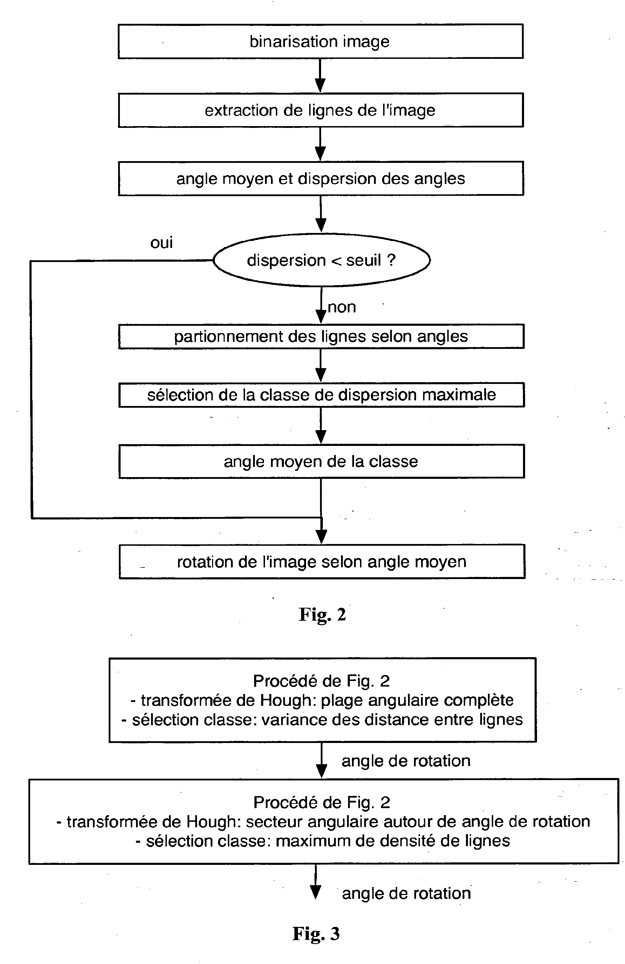

De manière générale, le procédé de détection et de correction de l'orientation d'un document présent dans une image comporte (Fig. 2) une étape d'extraction de lignes Li de l'image et de leurs angles $\theta_i$ exprimés par rapport à un repère du plan image.

Le procédé comporte également une étape pour déterminer la dispersion des angles $\theta_i$ associés aux lignes extraites Li.

En termes mathématiques, la dispersion des angles est donnée par $\sigma^2 = \dfrac{1}{N}\sum\limits_{i=1}^{N}\left(\theta_i - \overline{\theta}\right)^2$ avec $\overline{\theta}$

l'angle moyen calculé par $\bar{\theta} = \dfrac{1}{N}\sum\limits_{i=1}^{N}\theta_i$ avec N le nombre de lignes extraites de l'image.

De plus, si la dispersion des angles est inférieure à un seuil, le procédé se poursuit par une étape de rotation de l'image suivant un angle de rotation θ calculé par la moyenne des angles associés à toutes les lignes extraites de l'image, et si cette dispersion des angles est supérieure ou égale à ce seuil, le procédé se poursuit par une étape de partitionnement des lignes Li selon leur angle $\theta_i$ associé pour former des classes $C_j$. Le procédé se poursuit par une étape de sélection de la classe C dont la dispersion spatiale des lignes est maximale, étape qui est suivie de l'étape de rotation de l'image suivant un angle de rotation calculé par la moyenne des angles associés aux lignes de cette classe C.

Selon un mode de réalisation, les lignes sont partitionnées selon une méthode non supervisée, c'est-à-dire sans connaissance *a priori* qui permettrait de privilégier l'extraction de certains types de lignes (position dans l'image, nombre, orientation particulière les unes par rapport aux autres,...), et exclusive, c'est-à-dire que chaque ligne extraite appartient à une classe et une seule de la partition.

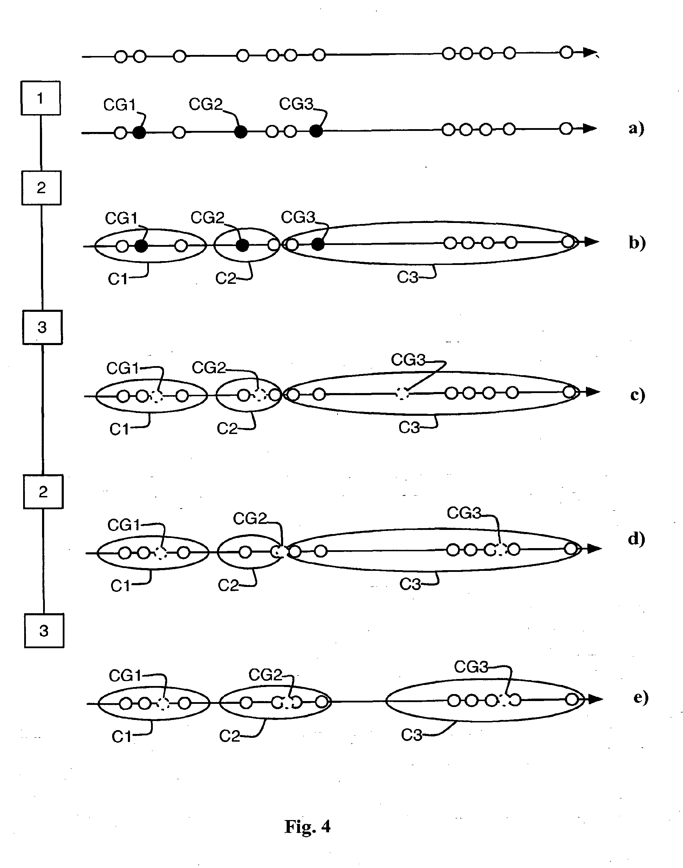

Selon un mode de réalisation illustré à la Fig. 4, la méthode non supervisée et exclusive est une méthode connue sous le nom de K-means.

Cette méthode partitionne les lignes extraites de l'image en un nombre entier M de classes à partir des angles $\theta_i$ qui sont associés à ces lignes Li. M est fixé *a priori.*

A cet effet, la méthode comporte une étape 1 de choix, *a priori,* de M centres de classe CGj, chaque centre de classe CGj étant un angle associé à l'une des lignes extraites Li.

Selon l'exemple de la Fig. 4a), chaque angle $\theta_i$ associé à une ligne extraite Li est représenté par un rond clair et ces angles $\theta_i$ sont ordonnés selon un axe orienté en fonction de la valeur de ces angles qui s'étale sur une plage angulaire de 0 à $2\pi$ par exemple. De plus, chaque angle, qui est choisi comme centre de classe CGj est représenté par un rond noir. Selon cet exemple, M est égal à trois.

Selon un mode de réalisation, les M centres de classe sont choisis aléatoirement parmi les angles associés aux lignes extraites.

La méthode comporte également une étape 2 de création d'une nouvelle partition des lignes extraites Li en affectant une ligne extraite Li à une classe Cj lorsqu'un critère de distance d($\theta_i$, $CG_j$) entre l'angle $\theta_i$ associé à cette ligne extraite et le centre CGj de cette classe Cj est minimal. Selon l'exemple de la Fig. 4b), trois classes sont ainsi obtenues : la classe C1 qui regroupe trois lignes, la classe C2 qui regroupe deux lignes et la classe C3 qui regroupe sept lignes.

Cette méthode comporte également une étape 3 de calcul des centres de gravité de chaque classe Cj ainsi créée.

Par exemple, le centre de gravité d'une classe Cj comportant Nj lignes Li est un angle moyen $\bar{\theta}_j$ calculé par $\bar{\theta}_j = \dfrac{1}{N_j}\sum\limits_{j=1}^{N_j}\theta_j$ et illustré à la Fig. 4c) par un cercle en pointillé.

Les étapes 2 et 3 sont répétées jusqu'à obtenir un extremum pour un critère d'arrêt. Selon l'exemple de la Fig. 4, deux itérations ont été illustrées (Fig. 4b à e).

Selon un mode de réalisation, le critère d'arrêt est un nombre prédéfini d'itérations ou un nombre qui quantifie une stationnarité de la partition. Cette stationnarité peut être quantifiée, par exemple, par une variation des centres de gravité entre deux itérations successives. Le procédé s'arrête alors lorsque cette variation est inférieure à un seuil.

Selon un mode de réalisation, le critère de distance est une métrique de Minkowski.

Dans le cas présent, cette métrique ne porte que sur une seule dimension et est définie, en termes mathématiques, par d($\theta_i$, $CG_j$)=$(|\theta_i - CG_j|^t)^{1/t}$ avec $t \geq 1$. Selon la valeur de *t*, plusieurs distances peuvent être définies dont la distance euclidienne (t=2), ou encore la distance de Manhattan (t=1).

Selon un mode de réalisation, au cours de l'étape de sélection de la classe C, une variance des distances entre lignes d'une même classe est calculée pour chaque classe Cj et la classe sélectionnée C est celle qui minimise cette valeur de variance. En termes mathématiques, dans le cas où à chaque ligne extraite Li est associée une distance $r_i$ qui sépare cette ligne de l'origine du repère du plan image, la variance des distances entre lignes d'une classe Cj est donnée par

$$\sigma_j^2 = \frac{1}{N_j}\sum\limits_{i=1}^{N_j}\left(r_i - \bar{r}_j\right)^2$$ avec Nj le nombre de lignes Li dans la classe Cj, et $\bar{r}_j$ la distance moyenne calculée par la moyenne des distances $r_i$ associées aux lignes Li de la classe Cj.

Selon un mode de réalisation, au cours de la sélection de la classe, pour chaque ligne extraite Li d'une même classe Cj, est calculée une distance $D_{i,k}$ entre une ligne Li de cette classe Cj et chacune des autres lignes de cette classe Cj. Dans le cas où à chaque ligne extraite Li est associée une distance $r_i$ qui sépare cette ligne de l'origine du repère du plan image, cette distance est donnée, par exemple, par une métrique de Minkowski avec t=1 : $D_{i,k} = |r_i - r_k|$ avec $r_i$ la distance associée à la ligne Li de la classe Cj et $r_k$ la distance associée à la ligne Lk de cette classe Cj.

Une densité de lignes DENj est ensuite calculée pour chaque classe Cj par la somme des valeurs minimales des distances entre lignes $D_{i,k}$ ainsi calculées pour chaque ligne extraite de cette classe. En termes mathématiques, la densité de lignes DENj est donnée par

$$DENj = \sum_{i=1}^{N_j} \min_{k \neq i} D_{i,k} \, .$$ La classe sélectionnée C est alors celle des classes Cj qui maximise cette densité de lignes.

Selon un mode de réalisation, l'image est binarisée préalablement à l'étape d'extraction de lignes de l'image. Cette binarisation est basée sur un seuillage adaptatif telle que celui décrit par J. Sauvola et al. (Sauvola and T. Sappaänen and S. Haapakoski and M. Pietikäinen, Adaptive Document Binarization. Proceedings of the Fourth International Conference on Document Analysis and Recognition (ICDAR), 1997.)

Il existe de multiples approches dans l'état de la technique pour détecter les lignes principales d'une image. Le plus souvent ces approches utilisent les gradients de l'image qui sont issus, par exemple, d'un filtre de Canny (Canny, J. (1986). A computational approach to edge detection. In IEEE Transactions on Pattern Analysis and Machine Intelligence, volume 8, pages 679-714). Par exemple, l'approche de Etemadi (Etemadi, A. (1992). Robust segmentation of edge data. In Int. Conf. on Image Processing and its Applications, page 311-314) consiste à appliquer un seuil sur les gradients de l'image, à grouper les maximaux locaux des gradients d'un voisinage autour d'un pixel pour former des contours et d'utiliser un procédé de fusion/séparation pour obtenir des lignes à partir de ces contours.

Selon un mode de réalisation préféré, les lignes sont extraites par la transformée de Hough telle que décrite dans la partie introductive et paramétrée, entre autres, par les valeurs limites d'une plage angulaire.

Selon une variante de ce mode de réalisation préféré, les scores inhérents à la transformée de Hough sont pondérés par les niveaux de gris des pixels de l'image. En d'autres termes, une case de l'accumulateur, qui correspond à un couple de coordonnées polaires $(r_i, \theta_i)$ proche d'un couple de coordonnées polaires calculé, est incrémentée d'une valeur fonction des valeurs de niveaux de gris du pixel et de son voisin qui ont été considérés pour le calcul du couple de coordonnées polaires.

Selon un mode de réalisation, illustré à la Fig. 3, l'ensemble des étapes du procédé est réalisé deux fois. Lors d'une première itération, la plage angulaire utilisée par la transformée de Hough est choisie pour couvrir l'ensemble des orientations possibles d'une ligne autour d'un pixel de l'image, la sélection de la classe C étant alors basée sur la variance des distances entre lignes et un angle de rotation est alors calculé par la moyenne des angles associés aux lignes de la classe sélectionnée. Lors de la seconde itération, la plage angulaire utilisée par la transformée de Hough est limitée à un secteur angulaire autour de l'angle de rotation calculé à l'itération précédente, la sélection de la classe C étant alors basée sur la densité des lignes de la classe ainsi sélectionnée, et un angle de rotation est alors calculé par la moyenne des angles associés aux lignes de la classe sélectionnée.

Selon une variante de ce mode de réalisation, la seconde étape est itérée, la plage angulaire utilisée par la transformée de Hough étant alors limitée à un secteur angulaire de plus en plus petit autour de l'angle de rotation calculé à l'itération précédente, la sélection de la classe C étant alors basée sur la densité des lignes de la classe ainsi sélectionnée, et un angle de rotation est alors calculé par la moyenne des angles associés aux lignes de la classe sélectionnée.

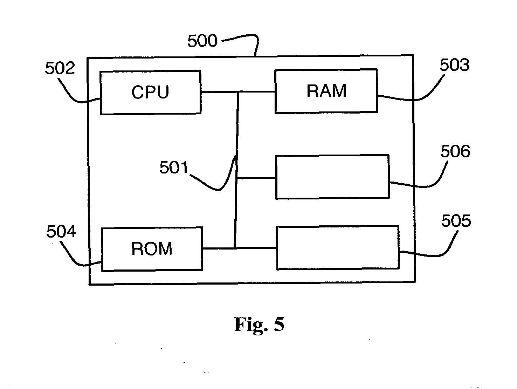

La Fig. 5 illustre schématiquement l'architecture d'un dispositif prévu pour mettre en oeuvre le procédé décrit en relation avec les Figs. 2 à 4.

Le dispositif 500 comporte, reliés par un bus de communication 501:

- un processeur, micro-processeur, microcontrôleur (noté μc) ou CPU (*Central Processing Unit* en anglais ou *Unité Centrale de Traitement* en français) 502 ;
- une mémoire vive RAM (*Random Access Memory* en anglais ou *Mémoire à Accès Aléatoire* en français) 503 ;
- une mémoire morte ROM (*Read Only Memory* en anglais ou *Mémoire à Lecture Seule* en français) 504;
- un lecteur 505 de medium de stockage, tel qu'un lecteur de carte SD *(Secure Digital Card* en anglais ou *Carte Numérique Sécurisée* en français);
- des moyens d'interface 506 avec un réseau de communication, comme par exemple un réseau de radiotéléphonie cellulaire ; et
- des moyens d'interface homme-machine 507, permettant, par exemple, de gérer un écran tactile et/ou un ensemble de touches.

Le microcontrôleur 502 est capable d'exécuter des instructions chargées dans la RAM 503 à partir de la ROM 504, d'une mémoire externe (non représentée), d'un support de stockage, tel qu'une carte SD ou autre, ou d'un réseau de communication. Lorsque le dispositif 500 est mis sous tension, le microcontrôleur 502 est capable de lire de la RAM 503 des instructions et de les exécuter. Ces instructions forment un programme d'ordinateur qui cause la mise en oeuvre, par le microcontrôleur 502, de tout ou partie des algorithmes décrits ciaprès en relation avec les Figs. 2 à 5.

Tout ou partie des algorithmes décrits ci-après en relation avec les Figs. 2 à 5 peut être implémenté sous forme logicielle par exécution d'un ensemble d'instructions par une machine programmable, tel qu'un DSP *(Digital Signal Processor* en anglais ou *Unité de Traitement de Signal Numérique* en français) ou un microcontrôleur, tel que le microcontrôleur 502, ou être implémenté sous forme matérielle par une machine ou un composant dédié, tel qu'un FPGA (*Field-Programmable GateArray* en anglais ou *Matrice de Portes Programmable sur Champ* en français) ou un ASIC (*Application-SpecificIntegrated*

*Circuit* en anglais ou *Circuit Intégré Spécifique à une Application* en français).

Des modes de réalisation du procédé ont été décrits pour permettre au lecteur de mettre en oeuvre la présente invention. Toutefois, la portée de l'invention ne saurait être limitée à ces modes de réalisation.

En particulier, l'extraction des lignes de l'image n'est pas limitée aux exemples cités mais étendue à toute méthode d'extraction de lignes qui permettent, au final, d'associer un angle à une ligne extraite de l'image. Il en est de même pour le partitionnement des lignes en classe qui peut être une méthode supervisée si une des indications est connue *a priori,* telle que par exemple une plage angulaire particulière ou une longueur de ligne spécifique. La portée de l'invention n'est pas non plus limitée aux métriques citées mais s'étend à toute autre métrique qui permet de quantifier la distance entre deux angles ou entre deux distances associées aux lignes extraites de l'image.

## Revendications

**1.** Procédé de détection et de correction de l'orientation d'un document présent dans une image numérique, ledit procédé comportant une étape d'extraction de lignes (Li) de l'image et de leurs angles ($\theta_i$) exprimés par rapport à un repère du plan image, **caractérisé en ce qu'**il comporte également les étapes suivantes :

- déterminer la dispersion des angles associés aux lignes extraites (Li),
- si la dispersion des angles est inférieure à un seuil, rotation de l'image selon un angle de rotation ($\overline{\theta}$) calculé par la moyenne des angles associés à toutes les lignes extraites de l'image,
- sinon :

- partitionner les lignes extraites (Li) selon leur angle associé pour former des classes (Cj),
- sélectionner la classe (C) dont la dispersion spatiale des lignes est maximale, et
- rotation de l'image selon un angle de rotation calculé par la moyenne des angles associés aux lignes qui appartiennent à cette classe ainsi sélectionnée.

**2.** Procédé selon la revendication 1, dans lequel les lignes sont partitionnées selon une méthode non supervisée et exclusive.

**3.** Procédé selon la revendication 2, dans lequel la méthode non supervisée et exclusive partitionne les lignes extraites en un nombre entier M de classes (Cj), fixé *a priori,* et comporte les étapes suivantes :

1. choisir *a priori* M centres de classe (CGj), chaque centre de classe (CGj) étant un angle associé à l'une des lignes extraites,
2. créer une nouvelle partition des lignes extraites en affectant une ligne extraite (Li) à une classe (Cj) lorsqu'un critère de distance ($d(\theta_i, CG_j)$) entre l'angle ($\theta_i$) associé à cette ligne extraite et le centre (CGj) de cette classe est minimal,
3. calculer des centres de gravité(CGj) de chaque classe ainsi créée,
4. répéter les étapes 2 et 3 jusqu'à obtenir un extremum pour un critère d'arrêt.

**4.** Procédé selon la revendication 3, dans lequel les M centres de classe (CGj) sont choisis aléatoirement parmi les angles associés aux lignes extraites.

**5.** Procédé selon la revendication 3 ou 4, dans lequel le critère d'arrêt est un nombre prédéfini d'itérations ou un nombre qui quantifie une stationnarité de la partition.

**6.** Procédé selon l'une des revendications 3 à 5, dans lequel le critère de distance est une métrique de Minkowski.

**7.** Procédé selon l'une des revendications 1 à 6, dans lequel au cours de l'étape de sélection de la classe, une variance des distances entre lignes d'une même classe est calculée pour chaque classe (Cj) et la classe sélectionnée (C) est celle qui minimise cette valeur de variance.

**8.** Procédé selon l'une des revendications 1 à 6, dans lequel au cours de la sélection de la classe,

- pour chaque ligne extraite (Li) d'une même classe (Cj), est calculée une distance ($D_{i,k}$) entre une ligne (Li) de cette classe (Cj) et chacune des autres lignes (Lk) de cette classe (Cj),
- une densité de lignes (DENj) est ensuite calculée pour chaque classe par la somme des valeurs minimales des distances entre lignes ainsi calculées pour chaque ligne extraite de cette classe, et
- la classe sélectionnée (C) est celle qui maximise cette densité de lignes.

**9.** Procédé selon l'une des revendications précédentes, dans lequel l'image est binarisée préalablement à l'étape d'extraction de lignes de l'image, ladite binarisation étant basée sur un seuillage adaptatif.

**10.** Procédé selon l'une des revendications précédentes, dans lequel les lignes sont extraites par une transformée de Hough paramétrée, entre autres, par les valeurs limites d'une plage angulaire.

**11.** Procédé selon la revendication 10, dans lequel les scores inhérents à la transformée de Hough sont pondérés par les niveaux de gris des pixels de l'image.

**12.** Procédé selon l'une des revendications 10 ou 11, dans lequel l'ensemble des étapes du procédé est réalisé deux fois, lors d'une première itération, la plage angulaire utilisée par la transformée de Hough est choisie pour couvrir l'ensemble des orientations possibles d'une ligne autour d'un pixel de l'image, la sélection de la classe (C) étant alors basée sur la variance des distances entre lignes et un angle de rotation est alors calculé par la moyenne des angles associés aux lignes de la classe sélectionnée, et lors de la seconde itération, la plage angulaire utilisée par la transformée de Hough est limitée à un secteur angulaire autour de l'angle de rotation calculé à l'itération précédente, la sélection de la classe (C) étant alors basée sur la densité des lignes de la classe ainsi sélectionnée, et un angle de rotation est alors calculé par la moyenne des angles associés aux lignes de la classe sélectionnée.

**13.** Procédé selon la revendication 12, dans lequel la seconde étape est itérée, la plage angulaire utilisée par la transformée de Hough étant alors limitée à un secteur angulaire de plus en plus petit autour de l'angle de rotation calculé à l'itération précédente, la sélection de la classe C étant alors basée sur la densité des lignes de la classe ainsi sélectionnée, et un angle de rotation est alors calculé par la moyenne des angles associés aux lignes de la classe sélectionnée.

**14.** Programme d'ordinateur, **caractérisé en ce qu'**il comprend des instructions pour mettre en oeuvre, par un dispositif, le procédé selon l'une des revendications 1 à 13 lorsque ledit programme est exécuté par un processeur du dispositif.

**15.** Moyens de stockage, **caractérisés en ce qu'**ils stockent un programme d'ordinateur comprenant des instructions pour mettre en oeuvre, par un dispositif, le procédé selon l'une des revendications 1 à 13, lorsque ledit programme est exécuté par un processeur du dispositif.

**Patentansprüche**

**1.** Verfahren zur Erfassung und Korrektur der Ausrichtung eines in einem digitalen Bild vorhandenen Dokuments, wobei das Verfahren einen Schritt der Extraktion von Linien (Li) des Bilds und von ihren Winkeln ($\theta_i$), ausgedrückt bezüglich eines Koordinatensystems der Bildebene, aufweist, **dadurch gekennzeichnet, dass** es außerdem die folgenden Schritte aufweist:

- Bestimmen der Dispersion der den extrahierten Linien (Li) zugeordneten Winkel,
- wenn die Dispersion der Winkel niedriger als eine Schwelle ist, Drehen des Bilds gemäß einem Drehwinkel ($\bar{\theta}$), der durch den Mittelwert der allen extrahierten Linien des Bilds zugeordneten Winkel berechnet wird,
- sonst:

  - Partitionieren der extrahierten Linien (Li) gemäß ihrem zugeordneten Winkel, um Klassen (Cj) zu bilden,
  - Wählen der Klasse (C), deren räumliche Dispersion der Linien maximal ist, und
  - Drehen des Bilds gemäß einem Drehwinkel, der durch den Mittelwert der den zu dieser so gewählten Klasse gehörenden Linien zugeordneten Winkel berechnet wird.

**2.** Verfahren nach Anspruch 1, wobei die Linien gemäß einer nicht überwachten und exklusiven Methode partitioniert werden.

**3.** Verfahren nach Anspruch 2, wobei die nicht überwachte und exklusive Methode die extrahierten Linien in eine ganze Zahl M von Klassen (Cj) partitioniert, die vorab festgelegt wird, und die folgenden Schritte aufweist:

  1. a priori Wählen von M Klassenzentren (CGj), wobei jedes Klassenzentrum (CGj) ein einer der extrahierten Linien zugeordneter Winkel ist,
  2. Erzeugen einer neuen Partition der extrahierten Linien, indem eine extrahierte Linie (Li) einer Klasse (Cj) zugewiesen wird, wenn ein Abstandskriterium ($d(\theta_i, CG_j)$) zwischen dem dieser extrahierten Linie zugeordneten Winkel ($\theta_i$) und dem Zentrum (CGj) dieser Klasse minimal ist,
  3. Berechnen der Schwerpunkte (CGj) jeder so erzeugten Klasse,
  4. Wiederholen der Schritte 2 und 3 bis zum Erhalt eines Extremums für ein Stopp-Kriterium.

**4.** Verfahren nach Anspruch 3, wobei die M Klassenzentren (CGj) zufällig unter den den extrahierten Linien zugeordneten Winkeln ausgewählt werden.

**5.** Verfahren nach Anspruch 3 oder 4, wobei das Stopp-Kriterium eine vordefinierte Anzahl von Iterationen oder eine Anzahl ist, die eine Stationarität der Partition quantisiert.

**6.** Verfahren nach einem der Ansprüche 3 bis 5, wobei das Abstandskriterium eine Minkowski-Metrik ist.

**7.** Verfahren nach einem der Ansprüche 1 bis 6, wobei während des Schritts der Wahl der Klasse eine Varianz der Abstände zwischen Linien einer gleichen Klasse für jede Klasse (Cj) berechnet wird, und die gewählte Klasse (C) diejenige ist, die diesen Varianzwert minimiert.

8. Verfahren nach einem der Ansprüche 1 bis 6, wobei während der Wahl der Klasse

- für jede extrahierte Linie (Li) einer gleichen Klasse (Cj) ein Abstand ($D_{i,k}$) zwischen einer Linie (Li) dieser Klasse (Cj) und jeder der anderen Linien (Lk) dieser Klasse (Cj) berechnet wird,
- eine Dichte von Linien (DENj) anschließend für jede Klasse durch die Summe der minimalen Werte der so berechneten Abstände zwischen Linien für jede extrahierte Linie dieser Klasse berechnet wird, und
- die gewählte Klasse (C) diejenige ist, die diese Liniendichte maximiert.

9. Verfahren nach einem der vorhergehenden Ansprüche, wobei das Bild vor dem Schritt der Extraktion von Linien des Bilds binarisiert wird, wobei die Binarisierung auf einem adaptiven Schwellenverfahren basiert.

10. Verfahren nach einem der vorhergehenden Ansprüche, wobei die Linien durch eine Hough-Transformation extrahiert werden, die unter anderen durch die Grenzwerte eines Winkelbereichs parametriert wird.

11. Verfahren nach Anspruch 10, wobei die der Hough-Transformation inhärenten Scores durch die Graupegel der Pixel des Bilds gewichtet werden.

12. Verfahren nach einem der Ansprüche 10 oder 11, wobei die Gesamtheit der Schritte des Verfahrens zwei Mal durchgeführt wird, wobei bei einer ersten Iteration der von der Hough-Transformation verwendete Winkelbereich gewählt wird, um die Gesamtheit der möglichen Ausrichtungen einer Linie um ein Pixel des Bilds herum abzudecken, wobei die Wahl der Klasse (C) dann auf der Varianz der Abstände zwischen Linien basiert und ein Drehwinkel dann durch den Mittelwert der den Linien der gewählten Klasse zugeordneten Winkel berechnet wird, und bei der zweiten Iteration der von der Hough-Transformation verwendete Winkelbereich auf einem Winkelsektor um den in der vorherigen Iteration berechneten Drehwinkel begrenzt wird, wobei die Wahl der Klasse (C) dann auf der Dichte der Linien der so gewählten Klasse basiert, und ein Drehwinkel dann durch den Mittelwert der den Linien der gewählten Klasse zugeordneten Winkel berechnet wird.

13. Verfahren nach Anspruch 12, wobei der zweite Schritt wiederholt wird, wobei der von der Hough-Transformation verwendete Winkelbereich dann auf einen immer kleineren Winkelsektor um den in der vorhergehenden Iteration berechneten Drehwinkel herum begrenzt wird, wobei die Wahl der Klasse C dann auf der Dichte der Linien der so gewählten Klasse basiert, und ein Drehwinkel dann durch den Mittelwert der den Linien der ausgewählten Klasse zugeordneten Winkel berechnet wird.

14. Computerprogramm, **dadurch gekennzeichnet, dass** es Anweisungen enthält, um durch eine Vorrichtung das Verfahren nach einem der Ansprüche 1 bis 13 durchzuführen, wenn das Programm von einem Prozessor der Vorrichtung ausgeführt wird.

15. Speichereinrichtungen, **dadurch gekennzeichnet, dass** sie ein Computerprogramm speichern, das Anweisungen enthält, um durch eine Vorrichtung das Verfahren nach einem der Ansprüche 1 bis 13 durchzuführen, wenn das Programm von einem Prozessor der Vorrichtung ausgeführt wird.

## Claims

1. Method for detecting and correcting the direction of a document in a digital image, said method comprising a step of extracting lines (Li) of the image and their angles ($\theta_i$) expressed in relation to a reference of the image plane,
   **characterised in that** it also comprises the following steps:

   - determining the dispersion of the angles associated with the extracted lines (Li),
   - if the dispersion of the angles is less than a threshold, rotating the image according to an rotation angle ($\bar{\theta}$) calculated by the average of the angles associated with all of the extracted lines of the image,
   - otherwise:

     - partitioning the extracted lines (Li) according to their associated angle to form classes (Cj),
     - selecting the class (C) whose spatial dispersion of lines is maximum, and
     - rotating the image according to a rotation angle calculated by the average of the angles associated with the lines belonging to this class thus selected.

2. Method according to claim 1, wherein the lines are partitioned according to a non-supervised and exclusive method.

3. Method according to claim 2, wherein the non-supervised and exclusive method partitions the extracted lines into a whole number M of classes (Cj), fixed a *priori,* and comprises the following steps:

1. selecting a *priori* M class centres (CGj), each class centre (CGj) being an angle associated with one of the extracted lines,

2. creating a new partition of extracted lines by assigning an extracted line (Li) to a class (Cj) when a distance criterion (d($\theta_i$, CG$_j$)) between the angle ($\theta_i$) associated with this extracted line and the centre (CGj) of this class is minimal,

3. calculating the centres of gravity (CGj) of each class thus created,

4. repeating steps 2 and 3 until an extremum is obtained for a stop criterion.

4. Method according to claim 3, wherein the M class centres (CGj) are chosen randomly among the angles associated with the extracted lines.

5. Method according to claim 3 or 4, wherein the stop criterion is a predefined number of iterations or a number which quantifies a stationarity of the partition.

6. Method according to one of claims 3 to 5, wherein the distance criterion is a Minkowski metric.

7. Method according to one of claims 1 to 6, wherein during the stage of selecting the class, a variance of the distances between lines of the same class is calculated for each class (Cj) and the selected class (C) is that which minimises this variance value.

8. Method according to one of claims 1 to 6, wherein during the selection of the class,

- for each extracted line (Li) of the same class (Cj), a distance (D$_{i,k}$) between a line (Li) of this class (Cj) and each of the other lines (Lk) of this class (Cj) is calculated,
- a line density (DENj) is then calculated for each class by the sum of the minimum values of the distances between lines thus calculated for each extracted line of this class, and
- the selected class (C) is that which maximises this line density.

9. Method according to one of the preceding claims, wherein the image is binarized prior to the step of extracting lines from the image, said binarization being based on adaptive thresholding.

10. Method according to one of the preceding claims, wherein the lines are extracted by a Hough transform parametrized, inter alia, by the limit values of an angular range.

11. Method according to claim 10, wherein the scores inherent in the Hough transform are weighted by the greyscales of the pixels of the image.

12. Method according to one of claims 10 or 11, wherein all of the steps of the method are performed twice, in a first iteration, the angular range used by the Hough transform is chosen to cover all of the possible orientations of a line around a pixel of the image, the selection of the class (C) then being based on the variance of the distances between lines and a rotation angle is then calculated by the average of the angles associated with the lines of the selected class, and in the second iteration, the angular range used by the Hough transform is limited to an angular sector around the rotation angle calculated in the previous iteration, the selection of the class (C) then being based on the line density of the class thus selected, and a rotation angle is then calculated by the average of the angles associated with the lines of the selected class.

13. Method according to claim 12, wherein the second stage is iterated, the angular range used by the Hough transform then being limited to a smaller and smaller angular sector around the rotation angle calculated in the previous iteration, the selection of the class C then being based on the line density of the class thus selected, and a rotation angle is then calculated by the average of the angles associated with the lines of the selected class.

14. Computer program, **characterised in that** it comprises instructions for implementing, by means of a device, the method according to one of claims 1 to 13 when said program is executed by a processor of the device.

15. Storage means, **characterised in that** they store a computer program comprising instructions for implementing, by means of a device, the method according to one of claims 1 to 13, when said program is executed by a processor of the device.

**Fig. 1**

binarisation image

↓

extraction de lignes de l'image

↓

angle moyen et dispersion des angles

↓

oui

dispersion < seuil ?

↓ non

partionnement des lignes selon angles

↓

sélection de la classe de dispersion maximale

↓

angle moyen de la classe

↓

rotation de l'image selon angle moyen

**Fig. 2**

Procédé de Fig. 2
- transformée de Hough: plage angulaire complète
- sélection classe: variance des distance entre lignes

↓ angle de rotation

Procédé de Fig. 2
- transformée de Hough: secteur angulaire autour de angle de rotation
- sélection classe: maximum de densité de lignes

↓ angle de rotation

**Fig. 3**

Fig. 4

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 20010041439 A

**Littérature non-brevet citée dans la description**

- **CANNY, J.** A computational approach to edge detection. *IEEE Transactions on Pattern Analysis and Machine Intelligence,* 1986, vol. 8, 679-714

- **SAUVOLA ; T. SAPPAÄNEN ; S. HAAPAKOSKI ; M. PIETIKÄINEN.** Adaptive Document Binarization. *Proceedings of the Fourth International Conference on Document Analysis and Recognition,* 1997
- **ETEMADI, A.** Robust segmentation of edge data. *Int. Conf. on Image Processing and its Applications,* 1992, 311-314